Europäisches Patentamt

European Patent Office

Office européen des brevets

(11) Publication number: **0 135 323**
**B1**

# EUROPEAN PATENT SPECIFICATION

(45) Date of publication of patent specification: **04.01.89**

(21) Application number: **84305201.0**

(22) Date of filing: **31.07.84**

(51) Int. Cl.⁴: **C 01 D 7/14**

(54) **Production of sodium bicarbonate by reversion of NaHCO3-containing double salt.**

(30) Priority: **18.08.83 US 524486**

(43) Date of publication of application:
**27.03.85 Bulletin 85/13**

(45) Publication of the grant of the patent:
**04.01.89 Bulletin 89/01**

(84) Designated Contracting States:
**AT BE CH DE FR GB IT LI LU NL SE**

(56) References cited:
**EP-A-0 005 981**
**US-A-2 704 239**
**US-A-2 798 790**
**US-A-3 780 160**
**US-A-3 852 427**

(73) Proprietor: **FMC Corporation**
**2000 Market Street**
**Philadelphia Pennsylvania 19103 (US)**

(72) Inventor: **Copenhafer, William Clark**
**1107 Randolph Drive**
**Yardley, PA 19067 (US)**
Inventor: **Pfeffer III, Henry Albert**
**6 Hollyhock Way**
**Mercerville, NJ 08619 (US)**
Inventor: **Rauh, Francis**
**20 Grovers Mill Road**
**Plainsboro, NJ 08536 (US)**

(74) Representative: **West, Alan Harry et al**
**R.G.C. Jenkins & Co. 26 Caxton Street**
**London SW1H 0RJ (GB)**

## Description

This invention relates to the preparation of sodium bicarbonate from sodium sesquicarbonate and/or Wegscheider's salt, by effecting a reversion of the solid feed, in an aqueous medium, to crystalline sodium bicarbonate.

Sodium bicarbonate ($NaHCO_3$) is conventionally prepared by carbonation of aqueous sodium carbonate ($Na_2CO_3$); see R. N. Shreve et al, *Chemical Process Industries*, McGraw-Hill Book Co., 4th ed., 1977, p. 213.

Commercial bicarbonate processes first dissolve soda ash in an aqueous liquor and then introduce the saturated sodium carbonate solution into a carbonating tower or vessel, where it is intimately contacted with carbon dioxide gas and simultaneously cooled.

The crystallized sodium bicarbonate is withdrawn from the carbonating tower as an aqueous slurry, filtered, and dried. The aqueous liquor that remains after filtration of the solid sodium bicarbonate is used to dissolve more soda ash to continue the cyclic carbonation process.

This carbonation process, as well as other prior art carbonation procedures, suffers from several operating drawbacks: scale-formation on equipment surfaces; parallel equipment lines required to allow for periodic clean-outs; significant energy and corrosion costs due to hot operating temperatures; low product slurry density per pass due to limited sodium carbonate solubility.

Other carbonation processes for the production of sodium bicarbonate have also been disclosed in the prior art; in these an alkali other than aqueous sodium carbonate solution is treated with carbon dioxide.

European Patent Application Publication No. 5,981 (assigned to Stauffer Chemical Co.) describes the carbonation of a saturated solution of sodium carbonate and sodium bicarbonate or, alternatively, a slurry of sodium bicarbonate in such saturated solution, or a slurry of sodium bicarbonate and sodium sesquicarbonate in such saturated solution. A satisfactory crystalline sodium bicarbonate product is ensured by the presence of specific amounts of $Ca^{++}$ ion in solution during the carbonation.

U.S. Patent No. 3,780,160, issued to Waggener et al. on December 18, 1973, describes the multistep manufacture of sodium bicarbonate from trona (crude sodium sesquicarbonate). Trona ore is dissolved in aqueous liquor, and sodium sesquicarbonate is crystallized by vacuum cooling of the aqueous sodium bicarbonate-sodium carbonate solution. The crystalline sodium sesquicarbonate is recovered, and redissolved in a second aqueous liquor. This second aqueous sodium bicarbonate-sodium carbonate solution is then carbonated to produce crystalline sodium bicarbonate, which is recovered and dried.

U.S. Patent No. 2,704,239, issued to Pike on March 15, 1955, describes the production of a sodium bicarbonate intermediate from trona ore and next calcining the crystalline sodium bicarbonate to yield a light density soda ash. The bicarbonate intermediate is obtained by first dissolving trona ore in an aqueous, hot liquor containing sodium bicarbonate and sodium carbonate, treating such solution with carbon dioxide to increase its bicarbonate content and then cooling or concentrating such solution to crystallize sodium bicarbonate. The crystalline sodium bicarbonate may be recovered and dried or, alternatively, calcined to form a light soda ash.

The method of this invention yields a sodium bicarbonate product with good crystal habit and sizing without resorting to the conventional direct carbonation crystallization processes of the prior art.

In accordance with the present invention, sodium bicarbonate is produced in a continuous method which involves introducing granular solid sodium sesquicarbonate or Wegscheider's salt into an aqueous reversion slurry, saturated with respect to sodium bicarbonate and containing at least about 10 wt. % solids, to effect rapid and direct reversion of the crystalline feed to crystalline sodium bicarbonate; withdrawing a portion of the aqueous reversion slurry and separating crystalline sodium bicarbonate from the aqueous reversion liquor, the bicarbonate being substantially free of solid sodium sesquicarbonate or Wegscheider's salt; recycling aqueous reversion liquor, that remains after recovery of the bicarbonate product, to the aqueous reversion slurry; adjusting the bicarbonate content of the reversion liquor, via introduction of carbon dioxide to convert soluble carbonate to bicarbonate, to maintain a relatively constant composition in the aqueous liquor portion of the reversion slurry.

The aqueous liquor of the reversion slurry is desirably maintained at a relatively constant composition such that sodium bicarbonate is the stable solid phase and such that the equilibrium partial pressure of $CO_2$ vapor above the liquor is minimized. The reversion liquor composition is preferably selected so as to maintain the equilibrium partial pressure of $CO_2$ vapor below 13 kPa, and more preferably below 6.7 kPa.

The temperature of the reversion slurry is preferably maintained at 20—120°C, more preferably 35—85°C. The crystal slurry density of the reversion slurry is most preferably maintained at 15—40 wt. % solids. The reversion is desirably performed in a well-stirred vessel, preferably of a size that provides an average residence time of from 0.25—4 hours.

The reversion and carbonation adjustment may be carried out as a single operation or separately. In a preferred embodiment, the carbon dioxide is introduced into the recycled reversion liquor, prior to its return to the reversion slurry.

The method of this invention is especially suited for use with carbon dioxide gas mixtures, which preferably contain at least 10 vol. % $CO_2$ in the mixture.

Fig. 1 is a schematic flow diagram of a preferred embodiment of the invention which utilizes sodium sesquicarbonate as a solid feed.

Fig. 2 is a phase diagram for the system NaHCO₃-Na₂CO₃-H₂O, showing the region in which sodium bicarbonate is the solid stable phase; equilibrium partial pressures of $CO_2$ vapor above such solutions are also shown by isobar lines.

The solid feed employed in the production of sodium bicarbonate by this method is characterized in that it is a double salt that contains sodium bicarbonate. It may be sodium sesquicarbonate ($Na_2CO_3 \cdot NaHCO_3 \cdot 2H_2O$) or Wegscheider's salt ($Na_2CO_3 \cdot 3NaHCO_3$), or combinations of these two salts.

Trona ore, a crude sodium sesquicarbonate found in large subterranean deposits in southwest Wyoming, is one preferred source of sodium sesquicarbonate for this invention. Ore containing a significant amount of insoluble shale associated with the soluble trona is desirably beneficiated, for example, by crushing and screening, to recover a crude sodium sesquicarbonate with a reduced level of insolubles. The presence of the usual soluble impurities in trona, such as nahcolite ($NaHCO_3$), sodium chloride (NaCl), sodium sulfate ($Na_2SO_4$), and the like, does not adversely affect the method of this invention.

Another preferred solid sesquicarbonate feed is the so-called "green cake" from a sesquicarbonate soda ash process; green cake is crystalline sodium sesquicarbonate that is crystallized during the production of sodium carbonate from trona via the "sesqui" process. Sesquicarbonate suitable for use in this invention may also be refined sodium sesquicarbonate, for example, obtained by recrystallization of green cake.

Ore obtained from the lakebed deposits of Owens Lake in California is still another suitable source of crude sodium sesquicarbonate suitable for use as solid sodium sesquicarbonate feed.

Besides sodium sesquicarbonate, Wegscheider's salt may also be used as the solid feed for this method. Wegscheider's salt prepared from trona or other soda sources and the naturally-occurring mineral, wegscheiderite, are both suitable.

The solid feed, should be granulare. Particle sizing should be such that substantially all of the granular feed is less than 850 μm sieve in size (ASTM E11-70). Granular feed whose average particle size is less than 425 μm sieve and larger than 75 μm sieve is particularly preferred.

The smaller the average particle size of the granular feed, the more rapid is the reversion process and residence time required for the reversion slurry. While particle sizing smaller than 75 μm sieve is workable, its fineness may cause dusting and material handling difficulties. Extremely fine material also requires extensive grinding or milling which adds to the preparation cost for the feed.

In the method of this invention, the NaHCO₃-containing feed solids are converted, or recrystallized, into crystalline sodium bicarbonate via a technique called reversion. The reversion effects a transformation of the NaHCO₃-containing double salt feed material into crystalline sodium bicarbonate, without the necessity of (i) forming a solution, (ii) carbonating the solution and (iii) crystallizing sodium bicarbonate, as is required in prior art bicarbonate production methods.

Consequently, an important advantage of this invention, with its reversion procedure for converting the solid feed to crystalline sodium bicarbonate, is that it does *not* require an energy-intensive crystallization step (cooling, evaporation, vacuum, etc.) and thus it consumes minimal energy. Equipment fouling, a common problem in prior art carbonation/crystallization bicarbonate methods, is also minimized in this invention since there is no conventional cooling crystallization of bicarbonate.

The aqueous reversion slurry employed in the reversion procedure is an aqueous liquor containing at least about 10 wt. % solids. The solids are crystalline sodium bicarbonate. Slurry densities (percentage of solids based on the weight of the slurry) for the reversion slurry are preferably within the range of from 10—70 wt. %, and more preferably from 15—40 wt. %.

The aqueous liquor of the reversion slurry has a composition that is substantially saturated with respect to sodium bicarbonate, which is the stable solid phase. The method of this invention utilizes the discovery that when crystalline sodium sesquicarbonate or Wegscheider's salt is added to the reversion slurry, such crystalline solids are rapidly and directly reverted, or recrystallized, to sodium bicarbonate. The sodium bicarbonate that results from this reversion process is relatively pure, containing very little, if any, traces of its precursor crystal.

The reversion process appears to involve a complete conversion by recrystallization of the solid feed material, which contains both sodium bicarbonate and sodium carbonate, to a crystalline solid that is essentially all sodium bicarbonate. The reversion process is in no way simply a coating procedure, in which sodium bicarbonate is crystallized from the saturated reversion slurry onto the feed crystals. The feed crystals are unstable in the reversion slurry and thus are completely and directly recrystallized to sodium bicarbonate in the reversion medium. The crystal habit of the resultant sodium bicarbonate, moreover, is that typical of sodium bicarbonate and is not a pseudomorphic sodium bicarbonate based on the precursor sodium sesquicarbonate or Wegscheider's salt crystals.

The aqueous reversion may be carried out in a single well-stirred vessel or tank, but multi-stage units provide the advantage of assuring complete conversion of the solid feed, with minimal feed solids being present in the recovered sodium bicarbonate. Because the reversion procedure occurs very rapidly, multi-stage operation is only a significant consideration where the particle sizing of the feed solids is relatively large, causing a slower reversion rate.

The reversion procedure is carried out on a continuous basis, which assures uniformity in the crystalline sodium bicarbonate product that results.

The aqueous reversion slurry should be maintained at a temperature within the range of 20 to 120°C. The slurry is preferably maintained at a temperature of from 35 to 85°C. The lower operating temperatures, below about 50°C, are especially preferred.

The preferred lower operating temperatures allow the use of carbon or mild steel equipment instead of the corrosion-resistant alloys that are ordinarily required to resist the corrosiveness of sodium bicarbonate at higher temperatures. Low operating temperatures are also more energy efficient, since high solution temperatures need not be maintained. Another advantage of the low temperatures is that the equilibrium $CO_2$ partial pressures are also low, which permits more efficient ($CO_2$) absorption of dilute carbon dioxide gas mixtures during the carbonation adjustment.

The solid feed, crystalline sodium sesquicarbonate or Wegscheider's salt, is ordinarly introduced directly into the reversion slurry, whereupon its conversion to sodium bicarbonate occurs. In an alternative procedure particularly suited for sodium sesquicarbonate, the solid sesquicarbonate feed may first be slurried in aqueous solution before its introduction to the reversion slurry. A preferred version of this latter procedure calls for the solid sodium sesquicarbonate feed to be slurried in the recycled aqueous reversion liquor, after the recovery of the solid sodium bicarbonate and prior to the return of such liquor to the reversion slurry. This procedure allows for the efficient introduction of solid sodium sesquicarbonate feed to a reversion slurry vessel operated above atmospheric pressure. Wegscheider's salt is suscpetible to decomposition in aqueous solution at low-moderate temperatures, so slurrying of this solid feed is best avoided.

The feed rate of solids introduced to the reversion slurry, and withdrawal rate of crystalline sodium bicarbonate, are preferably controlled such that the average residence time in the slurry ranges from about 15 minutes up to 4 hours. The relatively high slurry densities employed for the reversion slurry in this invention facilitate the use of long residence times in a moderately-sized reversion vessel. Longer residence times have the advantage of promoting growth of large crystals of good crystal habit.

Crystal habit modifiers, such as those described in U.S. Patents No. 2,954,282 and No. 3,852,427, may be used as desired to improve crystal habit, but are not required.

Recovery of the crystalline sodium bicarbonate product from the reversion slurry is relatively straightforward. A portion of the reversion slurry is withdrawn, desirably as a continuous flowstream, and conventional solids-liquid separation techniques are used to separate the crystalline product from the aqueous liquor. Centrifugation, hydrocloning, and filtration procedures are satisfactory for this purpose. The solids separation is desirably performed at about atmospheric pressure. The separated sodium bicarbonate solids are preferably washed, for example, to remove traces of entrained reversion liquor.

The separated sodium bicarbonate crystals are then dried, by conventional methods used for drying bicarbonate, to yield a free-flowing crystalline product. Air drying of the damp bicarbonate at a moderate temperature satisfactorily dries the recovered crystals without causing any significant decomposition of the bicarbonate. The free-flowing sodium bicarbonate product that results from the method of this invention is very pure, typically at least 99.8 wt. % $NaHCO_3$.

In order to assure that the reversion liquor composition in the slurry remains relatively constant and to allow the reversion process to be carried out continuously, carbon dioxide is added as necessary to convert the soluble sodium carbonate to sodium bicarbonate. As noted previously, the reversion liquor composition must be such that sodium bicarbonate is the stable solid phase. Expressed differently, the aqueous liquor of the reversion slurry must have a composition that lies within the sodium bicarbonate portion of the $Na_2CO_3$-$NaHCO_3$-$H_2O$ phase diagram.

The carbon dioxide addition is controlled to maintain the composition of the reversion liquor at a relatively constant value. The carbonation adjustment step thus ensures that soluble sodium carbonate does not accumulate in concentration in the reversion liquor.

The carbonation that is required in this invention differs significantly from prior art carbonation procedures: (i) reversion is the means used to effect bicarbonate crystallization in this method, and (ii) carbon dioxide requirements in this method are minimized by the fact that a portion of the feed material is already carbonated, i.e., sodium bicarbonate is present in the double salt feed.

The aqueous reversion liquor composition is desirably maintained at a composition that minimizes the equilibrium partial pressure of $CO_2$ above such liquor. This promotes efficient utilization of the $CO_2$ that is introduced into contact with the reversion liquor during the carbonation adjustment step. It will be recognized that the equilibrium $CO_2$ partial pressure depends on the temperature of the solution and thus will vary according to the particular operating temperature selected for the aqueous reversion slurry.

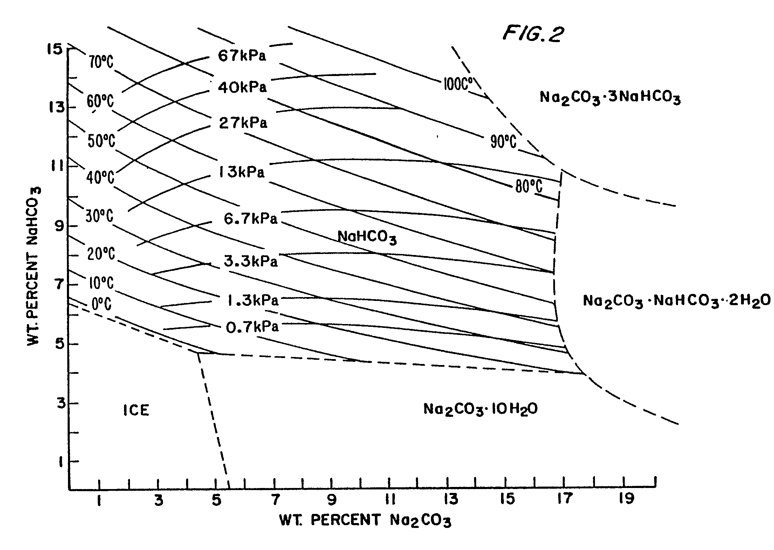

The composition of the aqueous liquor is preferably such that it has an equilibrium partial pressure of $CO_2$ above such liquor below 13 kPa, more preferably below 6.7 kPa. Reference should be made to Fig. 2, which illustrates equilibrium partial pressures of $CO_2$ vapor for various compositions in which sodium bicarbonate is the stable solid phase.

Introduction of the carbon dioxide to the aqueous reversion liquor may be carried out in any of several ways. Such carbonation is desirably performed continuously but can also be done intermittently. The $CO_2$ is desirably introduced in gaseous form.

The carbon dioxide adjustment can be performed concurrently with the reversion, the two being carried out in a single vessel. Carbonation in this situation may be effected by introducing the $CO_2$ to a side stream of aqueous reversion liquor diverted for this purpose.

The carbon dioxide may alternatively be introduced in a carbonation step that is separate from the reversion procedure. A preferred procedure involves introducing the carbon dioxide to the aqueous liquor, from which the solid sodium bicarbonate product has been removed, prior to the reintroduction of such recycled liquor to the reversion slurry. Alternatively, the carbon dioxide adjustment may be made prior to recovery of the crystalline sodium bicarbonate from the withdrawn reversion slurry flowstream.

The $CO_2$-treated liquor flowstream in either of these alternatives is then recycled to the aqueous reversion slurry to continue the method of the invention and thereby maintain a relatively constant composition in the aqueous liquor of the reversion slurry.

The carbon dioxide may be introduced as a pure gas, containing essentially 100% $CO_2$. The method of this invention, however, is particularly well suited for use with gaseous mixtures that contain dilute $CO_2$ concentrations. Such mixtures are often deemed waste gas streams because of their low $CO_2$ content and are otherwise simply vented to the atmosphere. Gaseous $CO_2$ mixtures typically contain water, oxygen and/or nitrogen as the diluent gases, but other gases may also be present provided they are relatively inert with respect to the reversion. By way of example, sulfur dioxide in appreciable concentrations is undesirable as a diluent gas since its absorption into the reversion liquor results in the formation of sodium sulfite and possibly sodium sulfate.

Gas mixtures that contain at least 10 vol. % $CO_2$ are suitable for use in this invention, with gas mixtures having at least 40 vol. % $CO_2$ being preferred.

Because the reversion liquor is desirably maintained at a composition that minimizes the equilibrium partial pressure of $CO_2$ above such liquor, the modest concentrations (partial pressure) of $CO_2$ in the dilute gas mixtures employed for this invention are nevertheless sufficient to assure efficient absorption of the $CO_2$ into the liquor.

Total operating pressure during the reversion and carbonation adjustment procedures is desirably maintained at or slightly above one atmosphere pressure (about 100 kPa), so as to minimize the complexity of the equipment required. Total pressure may range, however, from about 100 kPa up to 500 kPa, as desired. Pressure in the reversion vessel, if carbonation is separate from reversion, is desirably maintained at about atmospheric pressure, even when superatmospheric pressures are utilized during the carbonation adjustment.

Introduction of the carbon dioxide may be used, as desired, to help control the heat balance of the overall process. Removal of exothermic reaction heat from the system may be obtained by introducing the carbon dioxide at a temperature below the operating temperature of the aqueous reversion slurry, to provide some of the necessary cooling.

One of the advantages of the reversion procedures, besides the rapid and direct conversion of the solid feed to sodium bicarbonate, is that any impurities associated with the solid feed remain behind in the aqueous reversion liquor. The reversion thus effects a purification of the solid feed, as well as its conversion to sodium bicarbonate. In a preferred procedure, a portion of the recycled aqueous reversion liquor is purged, to prevent the accumulation of impurities in the aqueous reversion medium and to maintain the water balance of the reversion system.

Examples

Example 1

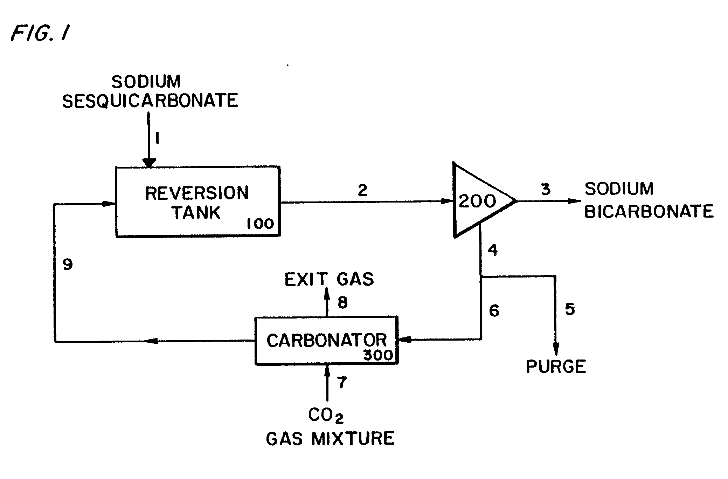

Sodium bicarbonate is prepared in this Example from crystalline sodium sesquicarbonate feed, at a rate of 1000 kg $NaHCO_3$/h, by the following continuous procedure. The description of this Example utilizes the schematic flow diagram shown in Figure 1, with reference numerals being those used in the drawing.

Solid sodium sesquicarbonate 1 is continuously introduced at a rate of 922 kg/h to a reversion slurry in an agitated reversion tank 100. The reversion slurry, a total of about 10,000 kg being contained in the tank 100, contains about 20 wt. % crystalline sodium bicarbonate and is maintained at a temperature of 50°C.

Reversion of the introduced solid sesquicarbonate in the slurry is very rapid, so that the solids in the reversion slurry are essentially all sodium bicarbonate. Slurry 2 is continuously withdrawn from the tank at a rate of 5000 kg/h, which provides a two-hour residence time in the reversion vessel. The reversion recrystallization of sesquicarbonate to sodium bicarbonate is only slightly exothermic, and no special heating/cooling provisions are required for maintaining the desired 50°C operating temperature.

The withdrawn slurry 2 is hydrocloned and centrifuged, shown as block 200 in the drawing, to recover crystalline sodium bicarbonate as a damp cake 3 produced at a rate of 1070 kg/h (1000 kg/h dry basis).

To ensure that the reversion liquor composition in the reversion tank 100 remains relatively constant during the continuous operation of this method, the reversion liquor 4 that remains after the separation step is treated further before being reintroduced to the reversion slurry. First, a portion 5 of the reversion liquor, about 26 kg/h, is purged and discarded to maintain the proper water balance in the system. Reversion of sodium sesquicarbonate to sodium bicarbonate, it should be noted, produces one mole of water for each mole of sodium sesquicarbonate introduced as feed.

Before being recycled to the reversion tank, the remaining reversion liquor 6 is treated with carbon dioxide, shown as block 300 in the drawing, to ensure that the proper, constant carbonate-bicarbonate composition is maintained in the reversion slurry tank liquor: 14.0 wt. % $Na_2CO_3$ and 7.0 wt. % $NaHCO_3$.

A carbon dioxide gas mixture 7, containing 66 vol. % $CO_2$ and 34 vol. % air, is contacted with the recycled reversion liquor 6 at a rate of 274 kg/h. The gas mixture 7 is contacted with the liquor stream 6 at one atmosphere total operating pressure, with the operating steady-state partial pressure of $CO_2$ in the exiting gas mixture 8 being 23.5 kPa. Because the equilibrium partial pressure of $CO_2$ vapor above the reversion liquor stream is just 2.0 kPa at 50°C (see Fig. 2), the $CO_2$ in the gas mixture 7 is readily absorbed into the recycled liquor flowstream, at a rate of 174 kg/h, which is a $CO_2$ absorption efficiency of 85%.

After adjustment with $CO_2$, the $CO_2$-treated flowstream 9 contains 3.1 wt. % $Na_2CO_3$ and 23.0 wt. % $NaHCO_3$, a portion of the bicarbonate being present in solid form. This flowstream 9 is continuously recycled to the reversion tank 100, at a rate of 4078 kg/h, to maintain the reversion slurry liquor composition at the desired constant value and thereby continue the bicarbonate process.

Similar yields are obtained when the process is carried out at a lower temperature, such as 35°C. The next example illustrates a low-temperature version of this method, with a different feed being used.

Example 2

Wegscheider's salt is used as the feed material in this Example to produce sodium bicarbonate continuously at a rate of 1000 kg/h, using basically the same procedure as in Example 1 except for a lower operating temperature, 35°C instead of 50°C.

Wegscheider's salt is continuously introduced in solid form at a rate of 869 kg/h to a reversion slurry containing about 20 wt. % crystalline sodium bicarbonate and maintained at 35°C. Reversion of the introduced Wegscheider's salt to sodium bicarbonate in the slurry is very rapid, and the solids in the slurry are essentially all sodium bicarbonate. Slurry is continuously withdrawn from the agitated tank at a rate of 5000 kg/h. As in Example 1, no special provisions for heating/cooling are required to maintain the desired 35°C operating temperature since the reversion recrystallization is only mildly exothermic.

The withdrawn slurry is centrifuged to yield a damp sodium bicarbonate cake, at a rate of 1070 kg/h (1000 kg/h dry basis).

The reversion liquor stream from the solids-separation step, before being recycled to the reversion slurry, is next treated with $CO_2$ to adjust its carbonate-bicarbonate content to ensure that the reversion liquor composition in the reversion slurry remains relatively constant during the continuous operation of this method. Unlike the first Example in which sodium sesquicarbonate was the solid feed, there is no need in this Example to purge a portion of recycled liquor to maintain the proper water balance. The conversion of Wegscheider's salt to sodium bicarbonate consumes one mole of water for each mole of salt, so make-up water is added to the system in this Example, at a rate of 98 kg $H_2O$/h during the carbonation adjustment.

The composition of the reversion liquor in the reversion slurry is desirably maintained at 14 wt. % $Na_2CO_3$ and 5.7 wt. % $NaHCO_3$. To this end, the reversion liquor flowstream is contacted with a carbon dioxide gas mixture containing 66 vol. % $CO_2$ and the balance air at a rate of 162 kg/h to adjust its carbonate-bicarbonate content. The gas mixture is contacted with the reversion liquor stream at one atmosphere total operating pressure, with the operating steady-state partial pressure of the exiting $CO_2$ gas being 23.5 kPa. Since the equilibrium partial pressure of $CO_2$ vapor above the reversion liquor stream is only 1.1 kPa at 35°C (see Fig. 2), the $CO_2$ in the gas mixture is readily absorbed into the recycled liquor flowstream at a rate of about 103 kg/h, which is a $CO_2$ absorption efficiency of 85%.

After adjustment with $CO_2$, the $CO_2$-treated flowstream contains about 7.3 wt. % $Na_2CO_3$ and 14.9 wt. % $NaHCO_3$, a portion of the bicarbonate being present in solid form. This flowstream is continuously recycled to the reversion slurry, at a rate of 4131 kg/h to maintain the reversion slurry liquor composition at the desired constant value and to thereby continue the bicarbonate recovery process.

**Claims**

1. A continuous method for the production of sodium bicarbonate, characterized by

introducing granular solid sodium sesquicarbonate or Wegscheider's salt into an aqueous reversion slurry, saturated with respect to sodium bicarbonate and containing at least 10 wt. % solids, to effect rapid and direct reversion of the crystalline feed to crystalline sodium bicarbonate;

withdrawing a portion of the aqueous reversion slurry and separating crystalline sodium bicarbonate from the aqueous reversion liquor, the bicarbonate being substantially free of solid sodium sesquicarbonate or Wegscheider's salt;

recycling aqueous reversion liquor, that remains after recovery of the bicarbonate product, to the aqueous reversion slurry;

adjusting the bicarbonate content of the reversion liquor, via introduction of carbon dioxide to convert soluble carbonate to bicarbonate, to maintain a relatively constant composition in the aqueous liquor portion of the reversion slurry.

2. The method of claim 1 characterized in that the solid feed is sodium sesquicarbonate in the form of trona.

3. The method of claim 1 characterized in that the solid feed is substantially all less than 850 μm sieve in size.

4. The method of claim 1 characterized in that the solid feed has an average particle size less than 425 μm sieve and larger than 75 μm sieve.

5. The method of claim 1 characterized in that the aqueous liquor of the reversion slurry is maintained at a composition such that sodium bicarbonate is the stable solid phase and such that the equilibrium partial pressure of $CO_2$ vapor above such liquor is minimized.

6. The method of claim 5 characterized in that the reversion liquor composition is selected so that the equilibrium partial pressure of $CO_2$ vapor is maintained below 13 kPa.

7. The method of claim 5 characterized in that the reversion liquor composition is selected so that the equilibrium partial pressure of $CO_2$ vapor is maintained below 6.7 kPa.

8. The method of claim 1 characterized in that the reversion slurry is maintained at a temperature of from 20 to 120°C.

9. The method of claim 1 characterized in that the reversion slurry is maintained at a temperature of from 35 to 85°C.

10. The method of claim 1 characterized in that the reversion is carried out in a well-stirred vessel.

11. The method of claim 1 characterized in that the reversion is caried out at a total operating pressure of from 100 to 500 kPa.

12. The method of claim 1 characterized in that the reversion slurry is maintained at a crystal slurry density of up to 70 wt. % solids.

13. The method of claim 12 characterized in that the reversion slurry is maintained at a crystal slurry density of 15 to 40 wt. % solids.

14. The method of claim 1 characterized in that the average residence time in the reversion slurry ranges from 0.25 to 4 hours.

15. The method of claim 1 characterized in that the reversion and carbonation adjustment are carried out in a single vessel.

16. The method of claim 1 characterized in that the reversion and carbonation adjustment are carried out separately.

17. The method of claim 16 characterized in that $CO_2$ is introduced into the withdrawn portion of the aqueous reversion slurry prior to separation of the sodium bicarbonate product from the reversion liquor.

18. The method of claim 16 characterized in that $CO_2$ is introduced into the recycled reversion liquor, after recovery of the sodium bicarbonate product and prior to the liquor's return to the reversion slurry.

19. The method of claim 1 characterized in that the carbon dioxide is essentially pure carbon dioxide.

20. The method of claim 1 characterized in that the $CO_2$ contains diluent gases, being a gaseous $CO_2$ mixture.

21. The method of claim 20 characterized in that the gaseous $CO_2$ mixture contains at least 10 vol. % $CO_2$.

22. The method of claim 20 characterized in that the gaseous $CO_2$ mixture contains at least 40 vol. % $CO_2$.

23. The method of claim 20 characterized in that the gaseous $CO_2$ mixture contains water, oxygen and nitrogen.

24. The method of claim 1 characterized in that the carbonation adjustment is carried out at a total operating pressure of from 100 to 500 kPa.

25. The method of claim 1 characterized in that a portion of the recycled aqueous reversion liquor is purged, to prevent the accumulation of impurities in the reversion slurry.

26. The method of claim 1 characterized in that the solid feed is sodium sesquicarbonate and is added to the reversion slurry as an aqueous slurry.

27. The method of claim 26 characterized in that the solid sodium sesquicarbonate is introduced to the recycled reversion liquor prior to its return to the reversion slurry.

**Patentansprüche**

1. Kontinuierliches Verfahren zum Herstellen von Natriumbicarbonat, gekennzeichnet durch

Einführen von granulärem festen Natriumsesquicarbonat oder Wegscheidersalz in eine wässerige Umwandlungsaufschlämmung, die hinsichtlich Natriumbicarbonat gesättigt ist und mindestens 10 Gew.% Feststoffe enthält, um eine rasche und direkte Umwandlung der kristallinen Zufuhr in kristallines Natriumbicarbonat zu bewirken;

Entfernen eines Teiles der wässerigen Umwandlungsaufschlämmung und Abtrennen von kristallinem Natriumbicarbonat von der wässerigen Umwandlungsflüssigkeit, welches Bicarbonat im wesentlichen frei von festem Natriumsesquicarbonat oder Wegscheidersalz ist;

Rückführen von wässeriger Umwandlungsflüssigkeit, die nach Gewinnen des Bicarbonatproduktes zurückbleibt, zur wässerigen Umwandlungsaufschlämmung; und

Einstellen des Bicarbonatgehaltes der Umwandlungsflüssigkeit durch Einführen von Kohlendioxid zum überführen von löslichem Carbonat in Bicarbonat, um in dem wässerigen Flüssigkeitsteil der Umwandlungsaufschlämmung eine relativ konstante Zusammensetzung aufrechtzuerhalten.

2. Verfahren nach Anspruch 1, dadurch gekennzeichnet, daß die feste Zufuhr Natriumsesquicarbonat in Form von Tronasalz ist.

3. Verfahren nach Anspruch 1, dadurch gekennzeichnet, daß die feste Zufuhr im wesentlichen zur Gänze eine Siebgröße von weniger als 850 μm aufweist.

4. Verfahren nach Anspruch 1, dadurch gekennzeichnet, daß die feste Zufuhr eine mittlere Siebteilchengröße von weniger als 425 μm und größer als 75 μm aufweist.

5. Verfahren nach Anspruch 1, dadurch gekennzeichnet, daß die wässerige Flüssigkeit der Umwandlungsaufschlämmung bei einer derartigen Zusammensetzung gehalten wird, daß Natriumbicarbonat die stabile feste Phase ist und der Gleichgewichtspartialdruck von $CO_2$-Dampf über einer derartigen Flüssigkeit minimal gehalten wird.

6. Verfahren nach Anspruch 5, dadurch gekennzeichnet, daß die Zusammensetzung der Umwandlungsflüssigkeit so gewählt wird, daß der Gleichgewichtspartialdruck von $CO_2$-Dampf unter 13 kPa gehalten wird.

7. Verfahren nach Anspruch 5, dadurch gekennzeichnet, daß die Zusammensetzung der Umwandlungsflüssigkeit so gewählt wird, daß der Gleichgewichtspartialdruck von $CO_2$-Dampf unter 6,7 kPa gehalten wird.

8. Verfahren nach Anspruch 1, dadurch gekennzeichnet, daß die Umwandlungsaufschlämmung bei einer Temperatur von 20 bis 120°C gehalten wird.

9. Verfahren nach Anspruch 1, dadurch gekennzeichnet, daß die Umwandlungsaufschlämmung bei einer Temperatur von 35 bis 85°C gehalten wird.

10. Verfahren nach Anspruch 1, dadurch gekennzeichnet, daß die Umwandlung in einem gut gerührten Behälter durchgeführt wird.

11. Verfahren nach Anspruch 1, dadurch gekennzeichnet, daß die Umwandlung bei einem Gesamtarbeitsdruck von 100 bis 500 kPa durchgeführt wird.

12. Verfahren nach Anspruch 1, dadurch gekennzeichnet, daß die Umwandlungsaufschlämmung bei einer Kristallaufschlämmungsdichte von bis zu 70 Gew.-% Feststoffen gehalten wird.

13. Verfahren nach Anspruch 12, dadurch gekennzeichnet, daß die Umwandlungsaufschlämmung bei einer Kristallaufschlämmungsdichte von 15 bis 40 Gew.% Feststoffen gehalten wird.

14. Verfahren nach Anspruch 1, dadurch gekennzeichnet, daß die mittlere Verweilzeit in der Umwandlungsaufschlämmung 1/4 bis 4 Stunden beträgt.

15. Verfahren nach Anspruch 1, dadurch gekennzeichnet, daß die Umwandlung und die Carbonisierungseinstellung in einem einzigen Behälter durchgeführt werden.

16. Verfahren nach Anspruch 1, dadurch gekennzeichnet, daß die Umwandlung und die Carbonisierungseinstellung getrennt durchgeführt werden.

17. Verfahren nach Anspruch 16, dadurch gekennzeichnet, daß $CO_2$ in den entfernten Teil der wässerigen Umwandlungsaufschlämmung vor der Abtrennung des Natriumbicarbonatproduktes von der Umwandlungsflüssigkeit eingeführt wird.

18. Verfahren nach Anspruch 16, dadurch gekennzeichnet, daß $CO_2$ in die rückgeführte Umwandlungsflüssigkeit nach Gewinnung des Natriumbicarbonatproduktes und vor der Rückkehr der Flüssigkeit zu der Umwandlungsflüssigkeit eingeführt wird.

19. Verfahren nach Anspruch 1, dadurch gekennzeichnet, daß das Kohlendioxid im wesentlichen reines Kohlendioxid ist.

20. Verfahren nach Anspruch 1, dadurch gekennzeichnet, daß das $CO_2$ Verdünnungsgase enthält und eine gasförmige $CO_2$-Mischung ist.

21. Verfahren nach Anspruch 20, dadurch gekennzeichnet, daß die gasförmige $CO_2$-Mischung mindestens 10 Vol.% $CO_2$ enthält.

22. Verfahren nach Anspruch 20, dadurch gekennzeichnet, daß die gasförmige $CO_2$-Mischung mindestens 40 Vol. % $CO_2$ enthält.

23. Verfahren nach Anspruch 20, dadurch gekennzeichnet, daß die gasförmige $CO_2$-Mischung Wasser, Sauerstoff und Stickstoff enthält.

24. Verfahren nach Anspruch 1, dadurch gekennzeichnet, daß die Carbonisierungseinstellung bei einem Gesamtarbeitsdruck von 100 bis 500 kPa durchgeführt wird.

25. Verfahren nach Anspruch 1, dadurch gekennzeichnet, daß ein Teil der rückgeführten wässerigen Umwandlungsflüssigkeit gereinigt wird, um die Ansammlung von Verunreinigungen in der Umwandlungsaufschlämmung zu verhindern.

26. Verfahren nach Anspruch 1, dadurch gekennzeichnet, daß die feste Zufuhr Natriumsesquicarbonat ist und der Umwandlungsaufschlämmung als wässerige Aufschlämmung zugesetzt wird.

27. Verfahren nach Anspruch 26, dadurch gekennzeichnet, daß das feste Natriumsesquicarbonat in die rückgeführte Umwandlungsflüssigkeit vor ihrer Rückkehr zur Umwandlungsaufschlämmung eingeführt wird.

**Revendications**

1. Procédé en continu pour la production de bicarbonate de sodium, caractérisé en ce que:

on introduit du sesquicarbonate de sodium solide granulaire ou sel de Wegscheider dans une bouillie de réversion aqueuse saturée en bicarbonate de sodium et contenant au moins 10% en poids de matières solides pour effectuer une réversion rapide et directe de l'alimentation cristalline en bicarbonate de sodium cristallin;

on extrait une partie de la bouillie de reversion et on sépare le bicarbonate de sodium cristallin de la liqueur de réversion aqueuse, le bicarbonate étant pratiquement exempt de sesquicarbonate de sodium solide ou sel de Wegscheider;

on recycle la liqueur de réversion aqueuse qui reste après récupération du bicarbonate formée dans la bouille de réversion aqueuse;

on ajuste la teneur en bicarbonate de la liqueur de réversion par introduction de gaz carbonique pour transformer le carbone absolu en bicarbonate, pour maintenir une composition relativement constante dans la partie liqueur aqueuse de la bouillie de réversion.

2. Procédé de la revendication 1, caractérisé en ce que l'alimentation solide est du sesquicarbonate de sodium sous forme de trona.

3. Procédé de la revendication 1, caractérisé en ce que l'alimentation solide a dans sa quasi totalité une taille de 850 μm.

4. Procédé de la revendication 1, caractérisé en ce que l'alimentation solide a une taille de particule inférieure à 425 μm et supérieure à 75 μm.

5. Procédé de la revendication 1, caractérisé en ce que la liqueur aqueuse de la bouillie de reversion est maintenue à une composition telle que le bicarbonate de sodium soit la phase solide stable et telle que la pression partielle à l'équilibre de la vapeur de $CO_2$ au-dessus de cette liqueur soit réduite au minimum.

6. Procédé de la revendication 5, caractérisé en ce que la composition de la liqueur de réversion est choisie de telle sorte que la pression partielle à l'équilibre de la vapeur de $CO_2$ soit maintenue au dessous de 13 kPa.

7. Procédé de la revendication 5, caractérisé en ce que la composition de la liqueur de réversion est choisie de telle sorte que la pression partielle à l'équilibre de la vapeur de $CO_2$ soit maintenue au dessous de 6,7 kPa.

8. Procédé de la revendication 1, caractérisé en ce que la bouillie de réversion soit maintenue à une température de 20 à 120°C.

9. Procédé de la revendication 1, caractérisé en ce que la bouillie de réversion est maintenue à une température de 35 à 85°C.

10. Procédé de la revendication 1, caractérisé en ce que la réversion est effectuée dans un récipient énergiquement agité.

11. Procédé de la revendication 1, caractérisé en ce que la réversion est effectuée sous une pression opératoire totale de 100 à 500 kPa.

12. Procédé de la revendication 1, caractérisé en ce que la bouillie de réversion est maintenue à une densité de bouillie cristalline allant jusqu'à 70% de matières solides.

13. Procédé de la revendication 12, caractérisé en ce que la bouillie de réversion est maintenue à une densité de bouillie cristalline de 15 à 40% en poids de matières solides.

14. Procédé de la revendication 1, caractérisé en ce que le temps de séjour moyen dans la bouillie de réversion va de 0,25 à 4 heures.

15. Procédé de la revendication 1, caractérisé en ce que la réversion et l'ajustage de la carbonatation sont effectués dans un récipient unique.

16. Procédé de la revendication 1, caractérisé en ce que la réversion et l'ajustage de la carbonatation sont effectués séparément.

17. Procédé de la revendication 16, caractérisé en ce que du $CO_2$ est introduit dans la partie extraite de la bouillie de réversion aqueuse avant la séparation du bicarbonate de sodium formé de la liqueur de réversion.

18. Procédé de la revendication 16, caractérisé en ce que du $CO_2$ est introduit dans la liqueur de réversion recyclée après récupération du bicarbonate de sodium formé et avant le renvoi de la liqueur dans la bouillie de réversion.

19. Procédé de la revendication 1, caractérisé en ce que le gaz carbonique est du gaz carbonique pratiquement pur.

20. Procédé de la revendication 1, caractérisé en ce que le $CO_2$ contient des gaz diluants pour former un mélange de $CO_2$ gazeux.

21. Procédé de la revendication 20, caractérisé en ce que le mélange de $CO_2$ gazeux contient au moins 10% en volume de $CO_2$.

22. Procédé de la revendication 20, caractérisé en ce que le mélange de $CO_2$ gazeux contient au moins 40% en volume de $CO_2$.

23. Procédé de la revendication 20, caractérisé en ce que le mélange de $CO_2$ contient de l'eau, de l'oxygène et de l'azote.

24. Procédé de la revendication 1, caractérisé en ce que l'ajustage de la carbonatation est effectué sous une pression opératoire totale de 100 à 500 kPa.

25. Procédé de la revendication 1, caractérisé en ce qu'une partie de la liqueur de réversion aqueuse recyclée est purgée, pour éviter l'accumulation de l'impureté dans la bouillie de réversion.

26. Procédé de la revendication 1, caractérisé en ce que l'alimentation en solide est du sesquicarbonate de sodium et est ajouté à la bouillie de réversion sous forme de bouillie aqueuse.

27. Procédé de la revendication 26, caractérisé en ce que du sesquicarbonate de sodium solide est introduit dans la liqueur de réversion recyclée avant son renvoi dans la bouillie de réversion.

*FIG. I*

SODIUM
SESQUICARBONATE

1

| REVERSION TANK | 100 |

2

200

3 SODIUM
BICARBONATE

9

4

EXIT GAS

8

6

5

| CARBONATOR | 300 |

PURGE

7

CO$_2$
GAS MIXTURE

EP 0 135 323 B1

FIG.2

EP 0 135 323 B1